(19) **Europäisches Patentamt European Patent Office Office européen des brevets**

(11) **EP 1 639 272 B1**

(12) **EUROPEAN PATENT SPECIFICATION**

(45) Date of publication and mention
of the grant of the patent:
**05.08.2009 Bulletin 2009/32**

(51) Int Cl.:
**F16H 25/20** *(2006.01)*      **F16H 25/24** *(2006.01)*

(21) Application number: **04734673.9**

(22) Date of filing: **25.05.2004**

(86) International application number:
**PCT/EP2004/005595**

(87) International publication number:
**WO 2004/113762 (29.12.2004 Gazette 2004/53)**

(54) **ROLLING SCREW WITH SMALLER ADVANCE PER TURN THAN THE PITCH OF A THREADING COOPERATING THEREWITH**

ROLLSPINDEL MIT GERINGEREM VORSCHUB PRO UMDREHUNG ALS DIE STEIGUNG EINES DAMIT ZUSAMMENWIRKENDEN GEWINDES

VIS A BILLES PRESENTANT UNE VITESSE INFERIEURE PAR TOUR A CELLE DU PAS DU FILETAGE

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **23.06.2003 IT VI20030119**

(43) Date of publication of application:
**29.03.2006 Bulletin 2006/13**

(73) Proprietor: **Brun, Giancarlo**
**36015 Thiene (IT)**

(72) Inventor: **Brun, Giancarlo**
**36015 Thiene (IT)**

(74) Representative: **Terreran, Gabrio**
**Contrada Porta Santa Lucia, 48**
**36100 Vicenza (IT)**

(56) References cited:
**US-A- 3 614 900**      **US-A- 3 730 016**
**US-A- 3 756 092**      **US-A- 4 352 300**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present finding concerns a rolling screw that has application in the mechanical field, when it is necessary to move loads by applying a torque of forces of limited value.

Known in the current state of the art are:

- sliding screws: normally used in so-called "screw jacks", which have the drawback of a low yield due to the substantial sliding friction which develops between the threaded surfaces of the screw and of the female screw, in a mutual sliding position; with such a type of threaded coupling the axial advance of the screw for every turn is equal to the length of the pitch of the thread;

- rolling screws: are characterised by a high yield since the friction present in such types of coupling is of the rolling type, obtained with the use of bodies placed between screw and female screw configured with rollers or balls; thanks to the high yields such screws are reversible and can be divided into three types:

- ball screws, where the axial advance per turn is equal to the pitch of the threading and the torque used is substantially proportional to the load and to the ratio between the pitch and the nominal circumference of the threading of the screw.

- threaded planetary roller screws, where the advance per turn is dependent upon the pitch of the thread, the ratio between the pitch diameter of the screw and the pitch diameter of the planetary roller and the direction of rotation of the threading of the screw and of the planetary roller. Such types of screws hare applied when high load capacities associated with high translation speeds are required, made possible with the use of planetary rollers with a substantially smaller diameter with respect to the diameter of the screw (the advance per turn of the screw is greater than the pitch of the thread and for this reason they are also reversible) and the torque used is substantially proportional to the load and to the ratio between the advance and the pitch rolling circumference of the screw on the rollers;

- roller screws, where the axial advance is equal to the pitch of the thread, the load capacity is very high, but the rotation speed is of limited value; the torque used is substantially proportional to the load and to the ratio between the pitch and the pitch rolling circumference of the screw on the rollers.

A roller screw according to the preamble of claim 1 is known from US-A-3 730 016.

The purpose of the present finding is that.of realising a rolling screw that does not have the drawbacks of similar known products; in particular, it must be able to move loads of substantial size, with the application of a torque of minimal value, it must have a high number of turns and be an irreversible system.

A further purpose of the present finding is that of realising a mechanism, with the functional characteristics of the main purpose, which is constructively simple and cost-effective.

A further purpose of the present finding is that of realising products and machines, such as mechanical screw jacks, linear actuation units and the like, which use the rolling screw of the type described in the main purpose.

The main purpose is accomplished by a rolling screw as defined by the features of claim 1.

In a first embodiment the female screws, all having the same nominal diameter, each consist of a bearing, of the type that is able to simultaneously bear both radial and axial loads, consisting of an inner ring that has the inner hole threaded.

In a second embodiment, the threaded inner hole is formed on a bush which, in turn, is fitted on the inner ring of one or more bearings.

Constructively, the screw is inserted in one or more female screws, the axis of said female screws being parallel, but not coinciding with the axis of the screw: in such a way the contact between the thread of the screw and the thread of each of the female screws is realised, approximately at the generating line of the respective cylindrical surfaces; this can also be realised when the female screws are not coaxial to each other.

Kinematically, by making the screw rotate a corresponding rotation of the female screws in the bearings is also caused, by sliding, not prevented by antagonistic friction forces.

To be specific, each turn of the screw corresponds to a rotation of the female screws by a value smaller than a complete turn thereof; in particular, the axial advance of the screw in the sleeve is equal to the pitch of the thread multiplied by the difference between the number of turns completed by the screw and the number of turns completed by the female screw.

From the operative point of view, since the relative rotation axis between the screw and each of the female screws approximately coincides with the line of the points of contact between the two threads, the resulting friction torque is of reduced value, whereas, consequently, the yield is high; by taking the advance per turn of the screw to minimal values the yield also decreases up to the condition of irreversibility of the screw.

In the practical embodiment, the command is carried out through the use of a motor reducer with low transmission ratio, therefore reversible and, in situations of failure or lack of energy, even able to be actuated manually.

Finally, the finding foresees that the kinematism described above is completed with a mechanism that takes care of locking the rotation of the female screw in the sleeve, in the constructive solution with a rotating screw or the screw itself, in the solution with a rotating female screw, so as to take the aforementioned mechanism back to the operation similar to that of a normal sliding screw, with advance equal to the pitch of the thread; this allows it to be used for rapid movements in the absence of load.

The finding shall be better understood through the description of a possible embodiment thereof, given only as a non-limiting example, with the help of the attached tables of drawings, where:

- figs. 1 and 2 (Table I) respectively represent a plan view and a front elevated view, sectioned according to the line II-II, of an embodiment of the device according to the prior art;

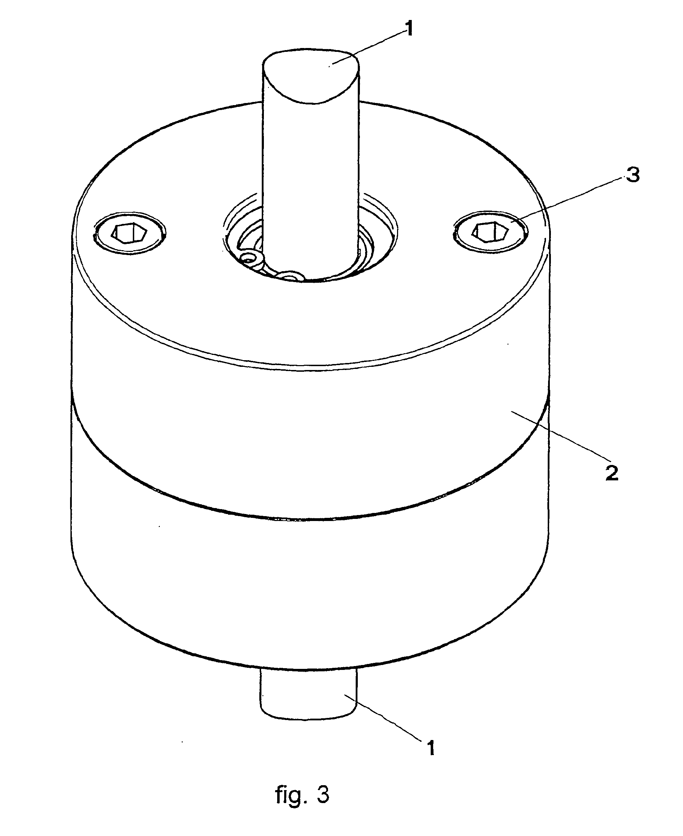

- fig. 3 (Table II) represents a perspective view of the device according to the prior art;

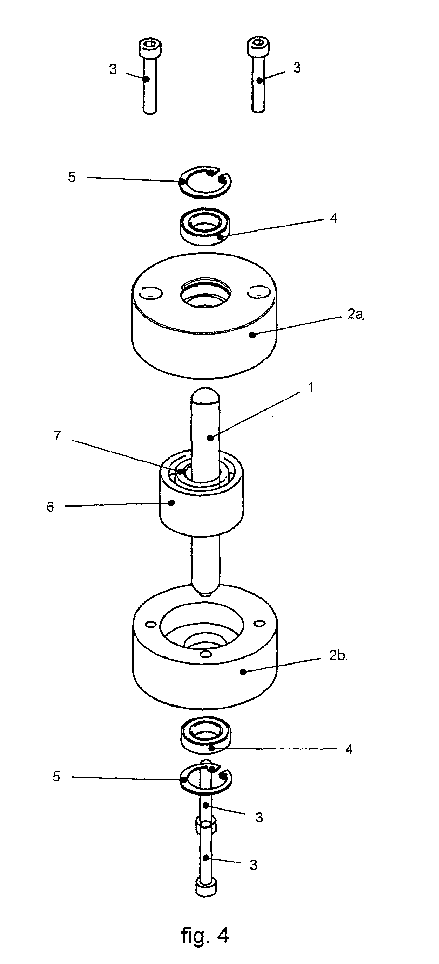

- fig. 4 (Table III) represents an exploded view of the device according to figure 3;

- figs. 5 and 6 (Table IV) schematically represent a plan view and a detailed view, respectively, of the device according to the prior art;

- fig. 7 (Table V) represents a kinematic diagram of the device according to the prior art.

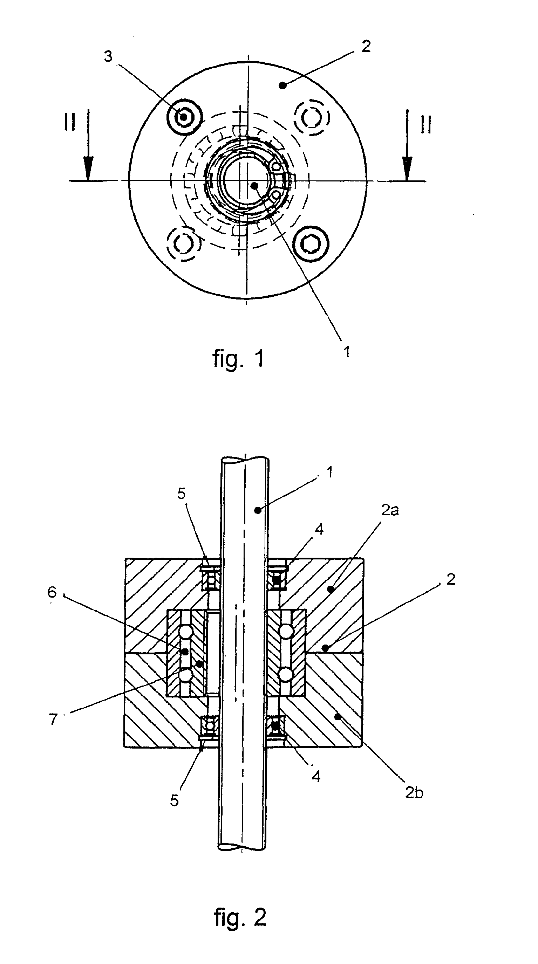

As can be seen, in particular in figs. 1 and 2, the screw 1 is inserted inside the sleeve 2, made up of two half-shells 2a and 2b, kept joined together through the screws 3.

In the sleeve 2, near to the two bases, the guide bearings 4 are inserted, kept locked by the elastic rings 5.

In the central zone of the sleeve 2 a bearing 6, of the type suitable for bearing axial loads, is mounted, which has its inner ring 7 with a threaded hole.

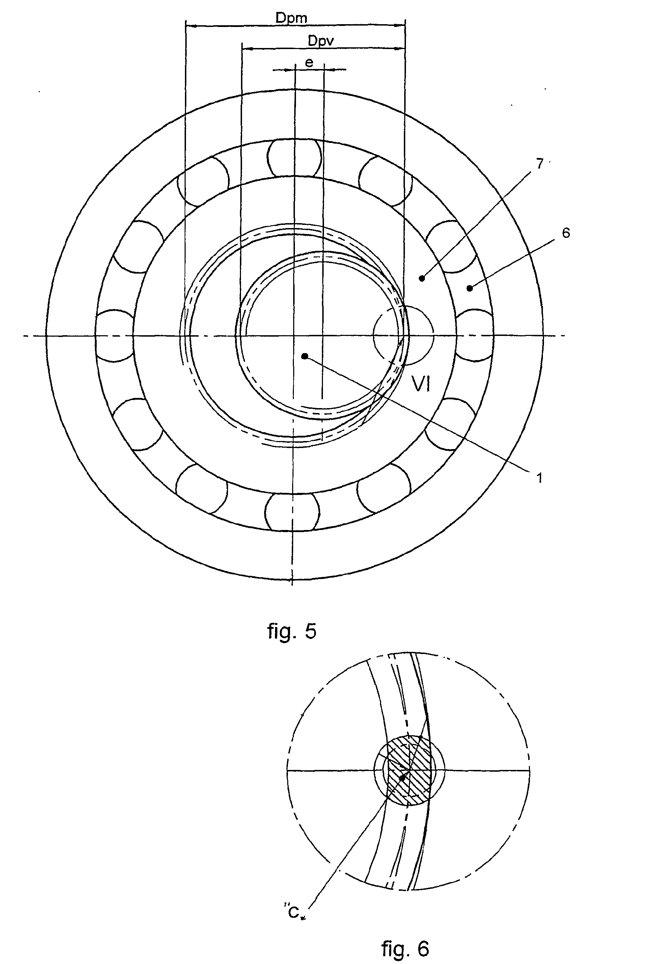

As can be seen, in particular, in figs. 1, 2 and 5, the bearing 6, with a threaded hole, is mounted eccentrically with respect to the axis of the screw 1 (value "e" of fig. 5) and the axis of the two bearings 4, for guiding the screw itself.

In such a way, as can be seen in fig. 6, the threads of the screw 1 and the threads of the female screw, formed on the inner ring 7, come into contact with each other approximately along a generatrix of the threaded surface and not on the whole surface.

Operatively, by making the screw 1 rotate about its axis, the threaded inner ring 7 of the central bearing 6 is also forced to rotate in the same direction as that of the aforementioned screw.

As can be seen in figs. 5, 6 and 7, the mutual rotation axis between the screw 1 and the threaded ring 7 coincides with the line of contact (see point "C") of the two ideal cylinders, one with a smaller pitch diameter "Dpv" referring to the screw and the other with a greater pitch diameter "Dpm" referring to the female screw, said two cylinders mutually rotating, without generating a sliding condition and where the aforementioned pitch diameters "Dpv" and "Dpm" are in an intermediate position between the diameter of the crest and the diameter of the base of the threads of the two matching elements, the screw and the female screw.

From observation of the figures and keeping in mind the embodiment described above it can be seen that, in the rotation step, the peripheral speed on the pitch diameter is identical for the screw and the female screw, whereas, due to the difference in diameter, the angular speed of the screw is greater with respect to the angular speed of the female screw; all of this means that one turn of the screw corresponds to less than one complete angular rotation of the female screw equal to an angle given by the formula:

$$\alpha = Dpv/Dpm \bullet 360°$$

where:

Dpv = pitch rolling diameter of the screw;

Dpm = pitch rolling diameter of the female screw;

Practically, in the two extreme operating conditions, if the screw is in the rotation step and the female screw is, at the same time, in the stop step, the advance of the screw for every turn thereof shall be equal to the pitch of the thread whereas, vice-versa, if the female screw and the screw, at the same time, carry out the same number of turns, there would be no relative movement and therefore the advance of the screw itself shall be zeroed.

In normal operation conditions of the device according to the finding the advance of the screw for every turn thereof is given by the formula:

$$a = p \bullet (1-Dpv/Dpm)$$

where:

p = pitch of the threading;

In practice, the closer the ratio between the two diameters is to 1, the lesser the advance of the screw for every complete turn thereof.

Again in normal operating conditions, the yield of the device according to the finding depends upon the friction that is generated and precisely upon:

- sliding friction that is present in the contact zone between the threads of the screw and of the female screw;

- rolling friction of the bearings of negligible value.

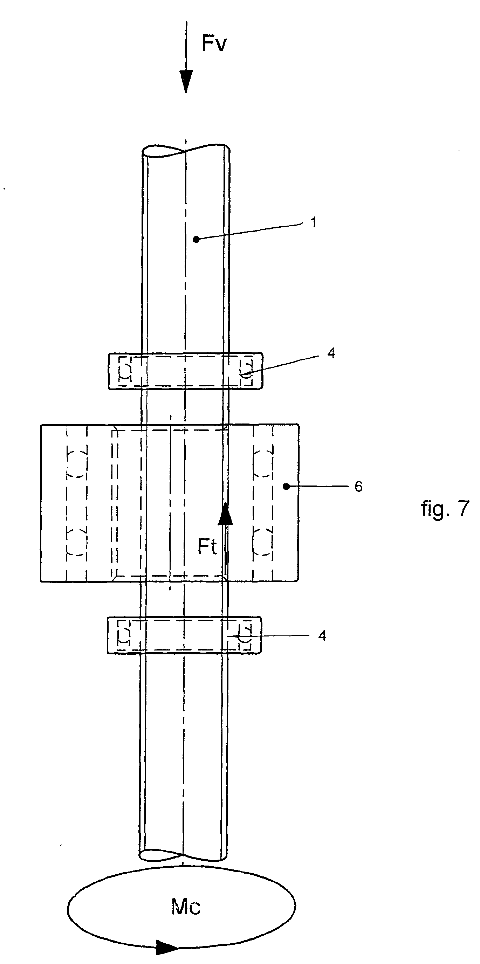

In the condition of normal application of the device according to the finding, ascribable to a lifting action of a load (see fig. 7) one operates according to the formula:

$$Ft = Fv + Fag$$

where:

Ft = load on the threads;

Fv = external load;

Fag = sliding friction, having the same direction, but opposite orientation with respect to the advance of the screw, present between the screw and the wall of the hole of the guide bearings and of a value, with greased surfaces, in the order of 0.15 Fv.

Again in the condition of normal application of the device according to the finding, the friction torque present between the threads in mutual rotation is given by the formula:

$$Maf = Ft \bullet Ra \bullet \mu$$

where:

Ra = radius of the friction force, of a value substantially equal to the pitch "p" of the thread;

$\mu$ = friction coefficient between the threads of the screw, of a value of about 0.10;

In the practical act, therefore, the moment to be applied to the screw 1 to cause it to advance is given by the formula:

$$Mc = Ft \bullet a/(2\pi) + Maf = Ft \bullet a/(2\mu) + Ft \bullet p \bullet \mu$$

where, replacing the numerical values, it is:

$$Mc = 1.15 \bullet Fv \bullet [a/(2\mu)+0.10 \bullet p] = 1.15 \bullet Fv \bullet [0.16 \bullet a + 0.10 \bullet p]$$

As can be seen from the last formula, since the advance value is less than the value of the pitch, the friction can reach values that give the irreversibility of the system, and the torque value necessary for lifting the load is very low, due to the low advance value for every turn of the screw.

Finally, the load capacity and the correct operation of the device according to the finding is dependent upon numerous operative factors such as the number of threads in contact, the load capacity of the single or plurality of bearings that support the female screw and the presence of radial flexing loads of the screw, generated by the type of threading and by the eccentricity between the direction of reaction Ft of the threads with respect to the direction of the load Fv of the screw.

According to the finding, the embodiment foresees the use of two or more female screws contained inside the sleeve itself.

Within the general operating principle described above, the constructive solution for a practical embodiment of the rolling screw according to the finding can be of the most varying types; for example it is possible to foresee:

- that the screw 1 is idle whereas the threaded ring 7, applied to the female screw is placed in rotation through a transmission system, which uses *per se* known means, such as belts and gears;

- that the screw 1 is fixed, whereas the entire sleeve 2 is placed in rotation through a transmission system, which uses *per se* known means, such as belts and gears;

- the absence of guide bearings inside the sleeve;

- that the female screws consist of internally threaded bushes fitted in the hole of at least one of the sliding or rolling bearings contained in the sleeve;

- that the screw and the female screw are equipped with synchronised movement, realised with any type of *per se* known synchronisation device;

- that a preload is applied on the screw to realise an extremely precise movement and positioning of the rotating members to zero the tolerance clearance;

- the application of a locking/unlocking system of the rotation of the bearing or of the bearings of the female screw to obtain, when the aforementioned bearings are locked, an advance per turn of the screw equal to the value of the pitch of its thread;

- the application of a locking/unlocking system of the rotation of the screw to obtain, when it is locked, an advance per turn of the sleeve of a value equal to the pitch of the thread of the aforementioned screw;

- the use of a "free-wheel" type device, which prevents the rotation of the bearing of the female screw in one of the two directions;

- the use of a "free-wheel" type device, which prevents the rotation of the screw in one of the two directions;

- a plurality of female screws that have diameters of different values;

- that from the plurality of female screws, with different diameters, only a selected one can remain in contact with the screw, so as to obtain an advance per turn of the screw dependent upon the diameter of the specific female screw being used;

- that the diameters of each of the female screws have a value such that when all of the aforementioned female screws are in the condition of detachment from the screw it is possible to make the screw slide freely on the guide bearings;

- that the female screw is equipped with circumferential throats having the same pitch as the threading and with advance per turn equal to the value of the pitch of the thread of the screw;

- that the screw is equipped with circumferential throats and with advance per turn equal to the threading of the female screw;

- that one or more female screws are replaced with externally threaded bearings, said bearings being able to be placed in contact with the screw, to obtain advances per turn of a greater value with respect to the pitch of the threading of the screw itself.

**Claims**

1. Rolling screw with smaller advance per turn than the pitch of the threading, comprising a screw (1) and a threaded coupling having female screws inserted in a single body or sleeve (2) in which the screw (1) is turned inside the female screws and where the pitch of the thread of said female screws is equal to that of the screw (1) whereas the nominal diameter is greater than that of the screw itself, each of the female screws consisting of a bearing (6), able to simultaneously bear both radial and axial loads, with an inner ring (7) that has the threaded hole and where the axis of said female screws is parallel, but not coinciding, with the axis of the screw (1); in such a way, the contact between the thread of the screw (1) and the thread of each of the female screws is realized, approximately at the generating line of the respective cylindrical surfaces, the device being **characterized in that** the female screws are susceptible to being placed in a condition not in contact with the screw (1), independently from each other.

2. Rolling screw, according to claim 1, **characterized in that** the female screws consist of internally threaded bushes fitted in the hole of at least one of the sliding or rolling bearings contained in the sleeve.

3. Rolling screw, according to one of claims 1 and 2, **characterized in that** the female screws are not arranged coaxial to each other.

4. Rolling screw, according to one of claims 1 to 3, **characterized in that** the sleeve (2) is made up of two half-shells (2a, 2b), kept joined together through mobile connection members (3) in the sleeve (2), near to the two bases, with guide bearings (4) being inserted in the sleeve (2) and kept locked by elastic rings (5); **in that** the screw (1) itself is inserted but free to slide on said bearings (4).

5. Rolling screw, according to one or more of the previous claims,
**characterized in that** the screw (1) is idle, whereas the threaded rings (7), applied to the female screws, are placed in rotation through a transmission system, which uses means such as belts and gears.

6. Rolling screw, according to one or more of the previous claims, **characterized in that** the screw (1) is fixed, whereas the entire sleeve (2) is placed in rotation, through a transmission system, which uses means such as belts and gears.

7. Rolling screw, according to one or more of the previous claims, **characterized in that** a preload is applied on the screw (1), to realize an extremely precise movement and positioning of the rotating members to zero the tolerance clearance.

8. Rolling screw, according to one or more of the previous claims, **characterized in that** it further comprises a locking/ unlocking system for the rotation of the bearings (4) or of the bearings (7) of the female screws to obtain, when the aforementioned bearings are locked, an advance per turn of the screw (1) equal to the value of the pitch of its thread.

9. Rolling screw, according to one or more of the previous claims, **characterized in that** it further comprises a locking/ unlocking system for the rotation of the screw (1) to obtain, when it is locked, an advance per turn of the sleeve (2) of a value equal to the pitch of the thread of the aforementioned screw.

10. Rolling screw, according to one or more of the previous claims, **characterized in that** it comprises a "free-wheel" type device, which prevents the rotation of the bearings (6) of the female screws in one of the two directions.

11. Rolling screw, according to one or more of the previous claims, **characterized in that** it comprises a "free-wheel" type device, which prevents the rotation of the screw (1) in one of the two directions.

**12.** Rolling screw, according to one or more of the previous claims, **characterized in that** said female screws have diameters of different values.

**13.** Rolling screw, according to one or more of the previous claims, **characterized in that** from the plurality of female screws, with different diameters, only a selected one can remain in contact with the screw (1), so as to obtain an advance per turn of the screw dependent upon the diameter of the specific female screw being used.

**14.** Rolling screw, according to one or more of the previous claims, **characterized in that** the diameters of each of the female screws have a value such that when all of the aforementioned female screws are in the condition of detachment from the screw (1) it is possible to make the screw (1) slide freely on the guide bearings.

**15.** Rolling screw, according to one or more of the previous claims,
**characterized in that** the female screws are equipped with circumferential throats and with advance per turn equal to the threading value of the screw (1).

**16.** Rolling screw, according to one or more of the previous claims,
**characterized in that** the screw (1) is equipped with circumferential throats and with advance per turn equal to the threading pitch of the female screw.

**17.** Rolling screw, according to one or more of the previous claims,
**characterized in that** one or more female screws are replaced with externally threaded bearings.

**18.** Rolling screw, according to claim 19, **characterized in that** the externally threaded bearings are adapted to be placed in contact with the screw (1), to obtain advances per turn of a greater value with respect to the pitch of the threading of the screw itself.

**19.** Rolling screw, according to one or more of the previous claims, **characterized in that** it is actuated through the use of a motor reducer with low transmission ratio, therefore reversible and, in situations of failure or lack of energy, even able to be actuated manually.

**Patentansprüche**

**1.** Wälzschraube mit einem geringeren Vorschub pro Drehung als die Steigung des Gewindes, umfassend eine Schraube (1) und eine Gewindekopplung mit Schraubenmuttern, die in einem einzigen Körper oder Hülse (2) eingeführt sind, wobei die Schraube (1) im Inneren der Schraubenmuttern gedreht wird und die Steigung des Gewindes der Schraubenmuttern jener der Schraube (1) entspricht, während der Nenndurchmesser größer ist als jener der Schraube, wobei jede der Schraubenmuttern aus einem Lager (6), das dazu imstande ist, gleichzeitig radiale und axiale Belastungen zu erfahren, mit Innenring (7), der das Gewindeloch aufweist, besteht, wobei die Achse der Schraubenmuttern parallel zur Achse der Schraube (1), jedoch nicht deckungsgleich mit dieser ist; auf diese Weise wird der Kontakt zwischen dem Gewinde der Schraube (1) und dem Gewinde einer jeden der Schraubenmuttern in etwa bei der Erzeugenden der entsprechenden zylindrischen Oberflächen hergestellt, wobei die Vorrichtung **dadurch gekennzeichnet ist, dass** die Schraubenmuttern unabhängig voneinander in einen Zustand ohne Kontakt zur Schraube (1) gebracht werden können.

**2.** Wälzschraube nach Anspruch 1, **dadurch gekennzeichnet, dass** die Schraubenmuttern aus Buchsen mit Innengewinde bestehen, die in das Loch von zumindest einem der Gleit- oder Wälzlager, die in der Hülse enthalten sind, eingepasst sind.

**3.** Wälzschraube nach Anspruch 1 oder 2, **dadurch gekennzeichnet, dass** die Schraubenmuttern nicht koaxial zueinander angeordnet sind.

**4.** Wälzschraube nach einem der Ansprüche 1 bis 3, **dadurch gekennzeichnet, dass** die Hülse (2) aus zwei Halbschalen (2a, 2b) hergestellt ist, die durch bewegliche Verbindungselemente (3) in der Hülse (2) in der Nähe der beiden Grundflächen miteinander verbunden gehalten sind, wobei Führungslager (4) in der Hülse (2) eingeführt sind und durch elastische Ringe (5) gesperrt gehalten sind; und dass die Schraube (1) selbst eingeführt ist, aber an den Lagern (4) frei gleiten kann.

5. Wälzschraube nach einem oder mehreren der vorangegangenen Ansprüche, **dadurch gekennzeichnet, dass** die Schraube (1) antriebslos ist, während die Gewinderinge (7), die an den Schraubenmuttern angelegt sind, von einem Transmissionssystem, das Mittel wie Gurte und Zahnräder verwendet, in Drehung versetzt werden.

6. Wälzschraube nach einem oder mehreren der vorangegangenen Ansprüche, **dadurch gekennzeichnet, dass** die Schraube (1) feststehend ist, während die gesamte Hülse (2) von einem Transmissionssystem, das Mittel wie Gurte und Zahnräder verwendet, in Drehung versetzt wird.

7. Wälzschraube nach einem oder mehreren der vorangegangenen Ansprüche, **dadurch gekennzeichnet, dass** eine Vorspannung an die Schraube (1) angelegt ist, um eine äußerst präzise Bewegung und Positionierung der sich drehenden Elemente zu erreichen, um ein Toleranzspiel von null zu erreichen.

8. Wälzschraube nach einem oder mehreren der vorangegangenen Ansprüche, **dadurch gekennzeichnet, dass** sie ferner ein Sperr-/Lösesystem für die Drehung der Lager (4) oder der Lager (7) der Schraubenmutterm umfasst, um bei einer Sperre der zuvor genannten Lager einen Vorschub pro Drehung der Schraube (1) zu erreichen, der dem Wert der Steigung ihres Gewindes entspricht.

9. Wälzschraube nach einem oder mehreren der vorangegangenen Ansprüche, **dadurch gekennzeichnet, dass** sie ferner ein Sperr-/Lösesystem für die Drehung der Schraube (1) umfasst, um bei einer Sperre dieser einen Vorschub pro Drehung der Hülse (2) mit einem Wert, der der Steigung des Gewindes der zuvor genannten Schraube entspricht, zu erreichen.

10. Wälzschraube nach einem oder mehreren der vorangegangenen Ansprüche, **dadurch gekennzeichnet, dass** sie eine Vorrichtung vom "Freilauf"-Typ umfasst, die die Drehung der Lager (6) der Schraubenmuttern in eine der zwei Richtungen verhindert.

11. Wälzschraube nach einem oder mehreren der vorangegangenen Ansprüche, **dadurch gekennzeichnet, dass** sie eine Vorrichtung vom "Freilauf"-Typ umfasst, die die Drehung der Schraube (1) in eine der zwei Richtungen verhindert.

12. Wälzschraube nach einem oder mehreren der vorangegangenen Ansprüche, **dadurch gekennzeichnet, dass** die Schraubenmuttern Durchmesser mit unterschiedlichen Werten aufweisen.

13. Wälzschraube nach einem oder mehreren der vorangegangenen Ansprüche, **dadurch gekennzeichnet, dass** von der Vielzahl an Schraubenmuttern mit unterschiedlichen Durchmessern nur eine Ausgewählte in Kontakt mit der Schraube (1) bleiben kann, sodass ein Vorschub pro Drehung der Schraube erreicht wird, der vom Durchmesser der verwendeten Schraubenmutter abhängt.

14. Wälzschraube nach einem oder mehreren der vorangegangenen Ansprüche, **dadurch gekennzeichnet, dass** die Durchmesser der einzelnen Schraubenmuttern jeweils einen derartigen Wert aufweisen, dass es möglich ist, die Schraube (1) frei an den Führungslagern gleiten zu lassen, wenn alle der zuvor genannten Schraubenmuttern im von der Schraube (1) gelösten Zustand sind.

15. Wälzschraube nach einem oder mehreren der vorangegangenen Ansprüche, **dadurch gekennzeichnet, dass** die Schraubenmuttern Umfangsrillen sowie einen Vorschub pro Drehung aufweisen, der dem Gewindewert der Schraube (1) entspricht.

16. Wälzschraube nach einem oder mehreren der vorangegangenen Ansprüche, **dadurch gekennzeichnet, dass** die Schraube (1) Umfangsrillen sowie einen Vorschub pro Drehung aufweist, der der Gewindesteigung der Schraubenmutter entspricht.

17. Wälzschraube nach einem oder mehreren der vorangegangenen Ansprüche, **dadurch gekennzeichnet, dass** eine oder mehrere Schraubenmuttern durch Lager mit Außengewinde ersetzt sind.

18. Wälzschraube nach Anspruch 19, **dadurch gekennzeichnet, dass** die Lager mit Außengewinde dazu angepasst sind, in Kontakt zur Schraube (1) angeordnet zu werden, um Vorschübe pro Drehung zu erzielen, die einen in Bezug auf die Steigung des Gewindes der Schraube höheren Wert aufweisen.

**19.** Wälzschraube nach einem oder mehreren der vorangegangenen Ansprüche, **dadurch gekennzeichnet, dass** sie durch die Verwendung eines Getriebemotors mit niedrigem Übersetzungsverhältnis, und somit reversibel, betätigt wird und in Situationen des Ausfalls oder Fehlens von Energie auch manuell betätigbar ist.

**Revendications**

**1.** Vis à roulement avec avance par tour inférieure au pas du filetage, comprenant une vis (1) et un accouplement fileté ayant des vis femelles insérées dans un corps unique ou manchon (2) où la vis (1) est tournée à l'intérieur des vis femelles et où le pas du filet desdites vis femelles est égal à celui de la vis (1), tandis que le diamètre nominal est plus grand que celui de la vis, chacune des vis femelles consistant en un palier (6) apte à supporter simultanément des charges radiales et axiales, avec un anneau interne (7) qui présente le trou fileté et où l'axe desdites vis femelles est parallèle, mais non coïncidant, à l'axe de la vis (1) ; de cette manière se réalise le contact entre le filet de la vis (1) et le filet de chacune des vis femelles, approximativement sur la ligne génératrice des respectives surfaces cylindriques, le dispositif étant **caractérisé en ce que** les vis femelles peuvent être positionnées non en contact avec la vis (1), indépendamment l'une de l'autre.

**2.** Vis à roulement, selon la revendication 1, **caractérisée en ce que** les vis femelles consistent en des douilles filetées intérieurement fixées dans le trou d'au moins un des paliers lisses ou à roulement contenus dans le manchon.

**3.** Vis à roulement, selon l'une des revendications 1 et 2, **caractérisée en ce que** les vis femelles ne sont pas positionnées de manière coaxiale entre elles.

**4.** Vis à roulement, selon l'une des revendications de 1 à 3, **caractérisée en ce que** le manchon (2) se compose de deux demi-coquilles (2a, 2b), maintenues unies au moyen d'éléments de connexion mobiles (3) dans le manchon (2), près des deux bases, avec des paliers de guidage (4) étant insérés dans le manchon (2) et maintenus bloqués par des anneaux élastiques (5) et **en ce que** la vis (1) est insérée mais est libre de coulisser sur lesdits roulements (4),.

**5.** Vis à roulement, selon l'une ou plusieurs des revendications précédentes, **caractérisée en ce que** la vis (1) est folle, tandis que les anneaux filetés (7), appliqués aux vis femelles, sont mis en rotation grâce à un système de transmission, qui utilise des moyens, comme des courroies et des engrenages.

**6.** Vis à roulement, selon l'une ou plusieurs des revendications précédentes, **caractérisée en ce que** la vis (1) est fixée, tandis que le manchon entier (2) est mis en rotation, grâce à un système de transmission, qui utilise des moyens, comme des courroies et des engrenages.

**7.** Vis à roulement, selon l'une ou plusieurs des revendications précédentes, **caractérisée en ce qu'**une précharge est appliquée sur la vis (1) afin de réaliser un mouvement et un positionnement extrêmement précis des éléments de rotation pour annuler le jeu de tolérance.

**8.** Vis à roulement, selon l'une ou plusieurs des revendications précédentes, **caractérisée en ce qu'**elle comprend un système de blocage/déblocage pour la rotation des paliers (4) ou des paliers (7) des vis femelles pour obtenir, quand les paliers susmentionnés sont bloqués, une avance par tour de la vis (1) égal à la valeur du pas de son filet.

**9.** Vis à roulement, selon l'une ou plusieurs des revendications précédentes, **caractérisée en ce qu'**elle comprend également un système de blocage/déblocage pour la rotation de la vis (1) pour obtenir, quand elle est bloquée, une avance par tour du manchon (2) d'une valeur égale au pas du filet de la vis susmentionnée.

**10.** Vis à roulement, selon l'une ou plusieurs des revendications précédentes, **caractérisée en ce qu'**elle comprend un dispositif de type « à roue libre », qui empêche la rotation des paliers (6) des vis femelles dans une des deux directions.

**11.** Vis à roulement, selon l'une ou plusieurs des revendications précédentes, **caractérisée en ce qu'**elle comprend un dispositif de type « à roue libre », qui empêche la rotation de la vis (1) dans une des deux directions.

**12.** Vis à roulement, selon l'une ou plusieurs des revendications précédentes, **caractérisée en ce que** lesdites vis femelles présentent des diamètres aux valeurs différentes.

**13.** Vis à roulement, selon l'une ou plusieurs des revendications précédentes, **caractérisée en ce que** de la pluralité des vis femelles, avec diamètres différents, seulement une peut rester en contact avec la vis (1), de manière à obtenir une avance par tour de la vis qui dépend du diamètre de la vis femelle spécifique étant utilisée.

**14.** Vis à roulement, selon l'une ou plusieurs des revendications précédentes, **caractérisée en ce que** les diamètres de chacune des vis femelles présentent une valeur telle que quand toutes les vis femelles susmentionnées se trouvent dans la condition de se détancher de la vis (1), il est possible de faire en sorte que la vis (1) puisse coulisser librement sur les paliers de guidage.

**15.** Vis à roulement, selon l'une ou plusieurs des revendications précédentes, **caractérisée en ce que** les vis femelles sont dotées de gorges circonférentielles et avec une avance par tour égale à la valeur de filetage de la vis (1).

**16.** Vis à roulement, selon l'une ou plusieurs des revendications précédentes, **caractérisée en ce que** la vis (1) est dotée de gorges circonférentielles avec une avance par tour égale au pas de filetage de la vis femelle.

**17.** Vis à roulement, selon l'une ou plusieurs des revendications précédentes, **caractérisée en ce qu'**une ou plusieurs des vis femelles sont remplacées par des paliers filetés extérieurement.

**18.** Vis à roulement, selon la revendication 19, **caractérisée en ce que** les paliers filetés extérieurement sont adaptés pour être mis en contact avec la vis (1) afin d'obtenir des avances par tour d'une valeur plus grande par rapport au pas du filetage de la vis.

**19.** Vis à roulement, selon l'une ou plusieurs des revendications précédentes, **caractérisée en ce qu'**elle est actionnée par l'utilisation d'un motoréducteur à bas rapport de transmission, étant donc réversible et, en situations de panne ou de manque d'énergie, étant actionnable manuellement.

fig. 1

fig. 2

fig. 3

fig. 4

Dpm

Dpv

e

7

6

VI

1

fig. 5

"C"

fig. 6

Fv

1

4

6

fig. 7

Ft

4

Mc

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3730016 A